# EUROPEAN PATENT SPECIFICATION

(11) **EP 3 689 642 B1**
(45) Date of publication and mention of the grant of the patent: **30.06.2021**
(21) Application number: 20150744.9
(22) Date of filing: 08.01.2020
(51) Int. Cl.: B60C 11/03, B60C 11/13

(54) **TIRE**
REIFEN
PNEUMATIQUE

(30) Priority: 22.01.2019 JP 2019008580
(43) Date of publication of application: 05.08.2020
(73) Proprietor: Sumitomo Rubber Industries, Ltd., Kobe-shi, Hyogo-ken 651-0072 (JP)
(72) Inventor: IKEDA, Ryota, Kobe-shi, Hyogo 651-0072 (JP)
(74) Representative: Manitz Finsterwald Patent- und Rechtsanwaltspartnerschaft mbB

(56) References cited:
- EP-A1- 2 746 066
- DE-T5-112014 005 018
- JP-A- 2013 193 512
- JP-A- 2015 147 545
- US-A1- 2011 079 334

## Description

### BACKGROUND OF THE INVENTION

### Field of the Invention

The present invention relates to a tire, and more specifically relates to a tire having a plurality of land portions defined by main grooves

### Description of the Background Art

To date, various tires having land portions defined by main grooves that extend continuously in the tire circumferential direction, have been suggested. For example, the pneumatic tire disclosed in Japanese Laid-Open Patent Publication No. 2016-013820 includes a tread portion having an outer shoulder main groove, an inner shoulder main groove, and a crown main groove. Furthermore, in the tread portion of the pneumatic tire, an outer shoulder land portion, an inner shoulder land portion, and a pair of middle land portions between the outer shoulder land portion and the inner shoulder land portion are defined by the main grooves.

A tire in accordance with the preamble of claim 1 is known from JP 2013 193512 A. Related tires are known from US 2011/079334 A1, EP 2 746 066 A1 and DE 11 2014 005018 T5.

The pneumatic tire is expected to achieve both ride comfort and steering stability by specifying lug grooves and sipes disposed in the outer shoulder land portion and the inner shoulder land portion.

In general, in a pneumatic tire having four or five land portions as described above, progression of wear of the middle land portion tends to be accelerated, and the pneumatic tire is required to have improved wear resistance.

The inventors of the present invention have found through various experiments that wear resistance can be improved by specifying the depth of the main groove and the shape of the tread surface of the land portion, and have completed the present invention. As described above, a main object of the present invention is to provide a tire which can inhibit a middle land portion from being worn early and which has excellent wear resistance.

### SUMMARY OF THE INVENTION

The present invention is directed to a tire including a tread portion. The tread portion includes a plurality of main grooves that extend continuously in a tire circumferential direction between a first tread end and a second tread end, and a plurality of land portions that are defined by the main grooves. The main grooves include a first shoulder main groove disposed between the first tread end and a tire equator, a second shoulder main groove disposed between the second tread end and the tire equator, and one or two crown main grooves disposed between the first shoulder main groove and the second shoulder main groove. The land portions include a first middle land portion defined between the first shoulder main groove and the crown main groove and a second middle land portion defined between the second shoulder main groove and the crown main groove. On a meridian cross-section that includes a tire rotation axis in a normal state in which the tire is mounted on a normal rim at a normal internal pressure and no load is applied to the tire, a depth of the crown main groove is greater than each of a depth of the first shoulder main groove and a depth of the second shoulder main groove, and a tread surface of the first middle land portion and a tread surface of the second middle land portion each have a profile that is curved so as to project outward in a tire radial direction from an imaginary straight line that connects between both ends, in the tire axial direction, of the respective tread surface.

In the tire of the present invention, a difference in depth between the crown main groove and the first shoulder main groove and a difference in depth between the crown main groove and the second shoulder main groove are preferably each 0.3 to 0.5 mm.

In the tire of the present invention, in each of the first middle land portion and the second middle land portion, a maximum projection of the tread surface from an imaginary straight line that connects between both ends, in a tire axial direction, of the tread surface is 0.10 to 0.25 mm.

In the tire of the present invention, the maximum projection is less than each of the difference in depth between the crown main groove and the first shoulder main groove and the difference in depth between the crown main groove and the second shoulder main groove.

In the tire of the present invention, each main groove preferably has a groove wall surface that extends inward from a groove edge in the tire radial direction, and a groove bottom surface that is continuous with the groove wall surface. In each of the first shoulder main groove, the second shoulder main groove, and the crown main groove, the groove wall surface and the groove bottom surface are preferably connected by a curved surface having a curvature radius of 2.5 to 3.0 mm.

In the tire of the present invention, each main groove preferably has the groove wall surface that extends inward from the groove edge in the tire radial direction. In each of the first shoulder main groove, the second shoulder main groove, and the crown main groove, the groove wall surface is preferably tilted, relative to a line that is normal to a tread and passes through the groove edge, at an angle of 18 to 22°.

The tread portion of the tire of the present invention includes the plurality of main grooves and the plurality of land portions. The main grooves include the first shoulder main groove, the second shoulder main groove, and the crown main groove. The land portions include the first middle land portion defined between the first shoulder main groove and the crown main groove, and the second middle land portion defined between the second shoulder main groove and the crown main groove.

On a meridian cross-section that includes a tire rotation axis in a normal state in which the tire is mounted on a normal rim at a normal internal pressure and no load is applied to the tire, a depth of the crown main groove is greater than each of a depth of the first shoulder main groove and a depth of the second shoulder main groove. Thus, the tread portion is relatively easily bent in the groove bottom portion of the crown main groove. Therefore, a contact pressure that acts on the tread portion does not concentrate on the first middle land portion and the second middle land portion, and is also dispersed onto the land portions which are disposed outward of the first middle land portion and the second middle land portion. Therefore, the contact pressure onto the tread portion is uniformly distributed among the land portions.

Meanwhile, it has been found that, when the depth of the crown main groove is increased as described above, a relatively high contact pressure acts on both ends of the tread surface of each of the first middle land portion and the second middle land portion and, as a result, uneven wear is likely to occur at both the ends, and, therefore, improvement of wear resistance at the middle land portion is insufficient. In order to improve such a problem, the tire of the present invention has a profile in which a tread surface of the first middle land portion and a tread surface of the second middle land portion are each curved so as to project outward in the tire radial direction. Thus, the contact pressure that acts on both ends of the tread surface is reduced and uneven wear at each middle land portion is reduced.

### BRIEF DESCRIPTION OF THE DRAWINGS

FIG. 1 is a development of a tread portion of a tire according to one embodiment of the present invention;
FIG. 2 is a cross-sectional view taken along a line A-A in FIG. 1;
FIG. 3 is an enlarged view of a first middle land portion and a second middle land portion shown in FIG. 1; and
FIG. 4 is a cross-sectional view taken along a line B-B in FIG. 3.

### DESCRIPTION OF THE PREFERRED EMBODIMENTS

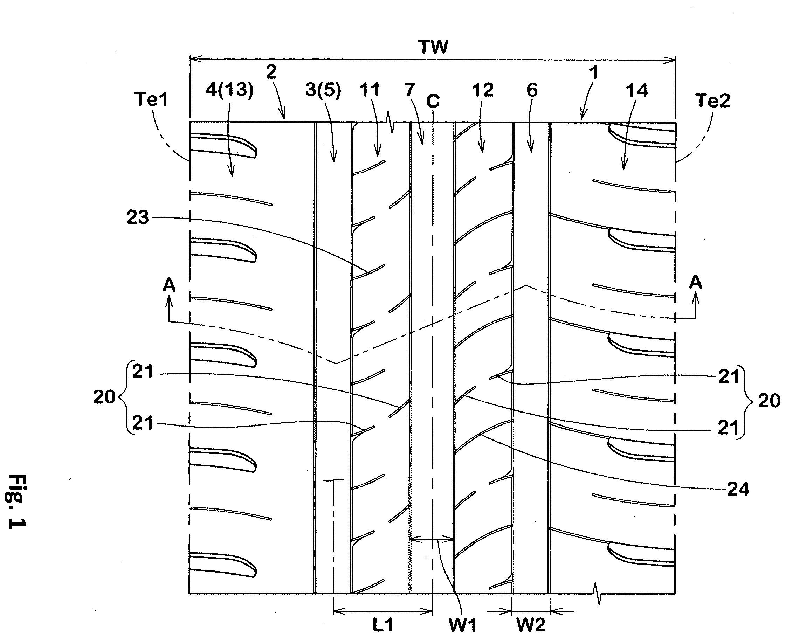

An embodiment of the present invention will be described below with reference to the drawings. FIG. 1 is a development of a tread portion 2 of a tire 1 according to one embodiment of the present invention. The tire 1 of the present embodiment is preferably used as, for example, a pneumatic tire for a passenger car. However, the present invention is not limited thereto, and the tire 1 may be used as a heavy duty pneumatic tire or a non-pneumatic tire which is not filled with pressurized air.

As shown in FIG. 1, for example, the tire 1 of the present embodiment has the tread portion 2 having a designated mounting direction to a vehicle. However, the present invention is not limited thereto. The tread portion 2 of the present embodiment has a first tread end Te1 positioned on the outer side of a vehicle when the tire 1 is mounted to the vehicle, and a second tread end Te2 positioned on the inner side of the vehicle when the tire 1 is mounted to the vehicle. The mounting direction to a vehicle is indicated, for example, on a sidewall portion (not shown) by a character or a symbol.

The first tread end Te1 and the second tread end Te2 are tire-axially outermost ground contact positions in the case of the tire 1 in a normal state being in contact with a plane at a camber angle of 0° under a normal load when the tire 1 is a pneumatic tire. The normal state represents a state in which a tire is mounted on a normal rim and is inflated with air to a normal internal pressure, and no load is applied to the tire. In the description herein, unless otherwise specified, dimensions of components of the tire, and the like are represented as values measured in the normal state.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

The "normal load" represents a load that is defined by a standard, in a standard system including the standard with which the tire complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

The tread portion 2 includes, between the first tread end Te1 and the second tread end Te2, a plurality of main grooves 3 that extend continuously in the tire circumferential direction and a plurality of land portions 4 that are defined by the main grooves 3.

The main grooves 3 include a first shoulder main groove 5 disposed between the first tread end Te1 and a tire equator C, a second shoulder main groove 6 disposed between the second tread end Te2 and the tire equator C, and one or two crown main grooves 7 disposed between the first shoulder main groove 5 and the second shoulder main groove 6.

For example, a distance L1 in the tire axial direction from the tire equator C to the groove center line of the first shoulder main groove 5 or the second shoulder main groove 6 is preferably 0.15 to 0.30 times a tread width TW. The tread width TW is a distance in the tire axial direction from the first tread end Te1 to the second tread end Te2 in the normal state.

In the present embodiment, one crown main groove 7 is disposed, for example, on the tire equator C. In another mode of the present invention, for example, two crown main grooves 7 may be disposed such that the tire equator C is positioned between the two crown main grooves 7.

In the present embodiment, for example, each main groove 3 linearly extends parallel to the tire circumferential direction. Each main groove 3 may extend so as to be, for example, corrugated.

For example, the groove width of each main groove 3 is preferably 7.5% to 10.0% of the tread width TW. In the description herein, the groove width of the main groove 3 represents a distance between groove edges on both sides in the direction orthogonal to the groove center line in the normal state. The groove edge is a boundary between the groove and the tread surface of the land portion in the normal state.

In the present embodiment, the first shoulder main groove 5 and the second shoulder main groove 6 preferably have the same groove width. A groove width W1 of the crown main groove 7 is preferably greater than a groove width W2 of the first shoulder main groove 5 or the second shoulder main groove 6. For example, the groove width W1 is 1.10 to 1.30 times the groove width W2.

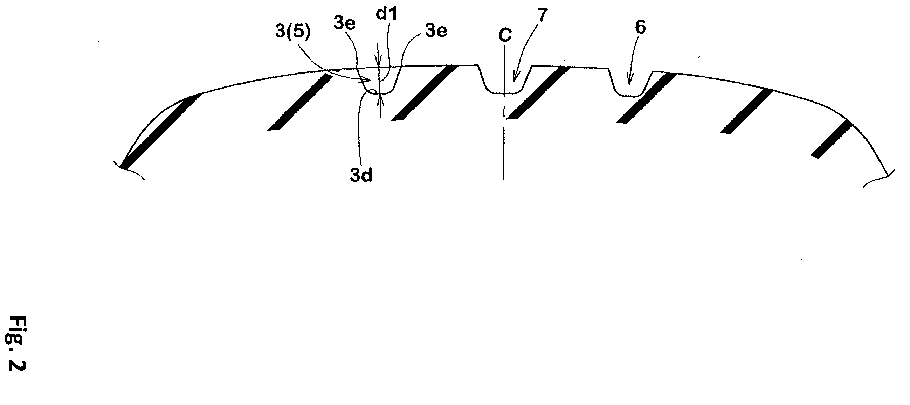

FIG. 2 is a cross-sectional view, taken along a line A-A, of the tread portion 2. FIG. 2 shows a meridian cross-section that includes a tire rotation axis in the normal state. As shown in FIG. 2, for example, a depth d1 of each main groove 3 is preferably 5 to 10 mm in the case of a pneumatic tire for a passenger car. The depth of the main groove 3 represents a distance, from a bottom 3d of the main groove 3 to an imaginary straight line connecting between groove edges 3e on both sides, in the length direction of the normal line passing through the bottom, in the normal state.

As shown in FIG. 1, the land portions 4 include a first middle land portion 11, a second middle land portion 12, a first shoulder land portion 13, and a second shoulder land portion 14. In the present embodiment, the tread portion 2 has a so-called four-rib pattern that has the three main grooves 3 and the four land portions 4 described above. In another mode of the present invention, for example, two crown main grooves 7 may be disposed such that the tread portion 2 includes five land portions 4.

The first middle land portion 11 is defined between the first shoulder main groove 5 and the crown main groove 7. The second middle land portion 12 is defined between the second shoulder main groove 6 and the crown main groove 7. The first shoulder land portion 13 is defined between the first shoulder main groove 5 and the first tread end Te1. The second shoulder land portion 14 is defined between the second shoulder main groove 6 and the second tread end Te2.

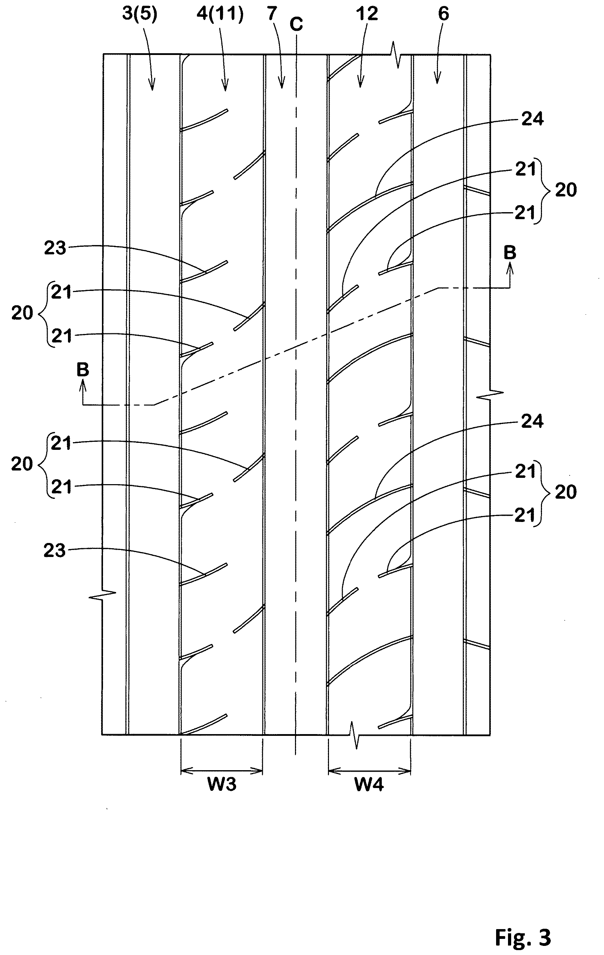

FIG. 3 is an enlarged view of the first middle land portion 11 and the second middle land portion 12. As shown in FIG. 3, for example, a width W3, in the tire axial direction, of the first middle land portion 11 and a width W4, in the tire axial direction, of the second middle land portion 12 are preferably each 0.10 to 0.20 times the tread width TW.

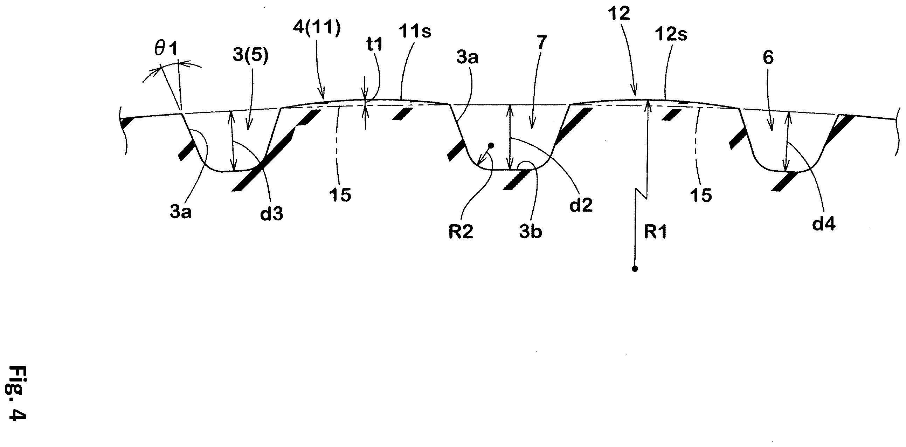

FIG. 4 is a cross-sectional view taken along a line B-B in FIG. 3. FIG. 4 shows a meridian cross-section that includes a tire rotation axis in the normal state. As shown in FIG. 4, a depth d2 of the crown main groove 7 is greater than each of a depth d3 of the first shoulder main groove 5 and a depth d4 of the second shoulder main groove 6. In FIG. 4, the difference in the depth between the main grooves is shown in an enlarged manner as compared with an actual one in order to make the invention easily understood.

In the above-described configuration, the tread portion 2 is relatively easily bent in the groove bottom portion of the crown main groove 7. Therefore, a contact pressure that acts on the tread portion 2 does not concentrate on the first middle land portion 11 and the second middle land portion 12, and is also dispersed onto the first shoulder land portion 13 and the second shoulder land portion 14 (shown in FIG. 1) which are disposed outward of the first middle land portion 11 and the second middle land portion 12. Therefore, the contact pressure onto the tread portion 2 is uniformly distributed among the land portions.

Meanwhile, it has been found that, when the depth of the crown main groove 7 is increased as described above, a relatively high contact pressure acts on both ends of the tread surface of each of the first middle land portion 11 and the second middle land portion 12 and, as a result, uneven wear is likely to occur at both the ends, and, therefore, improvement of wear resistance at the middle land portion is insufficient. In order to improve such a problem, the tire of the present invention has a profile in which a tread surface 11s of the first middle land portion 11 and a tread surface 12s of the second middle land portion 12 are each curved so as to project outward in the tire radial direction. Thus, the contact pressure that acts on both ends of the tread surface is reduced and uneven wear at each middle land portion is reduced.

In FIG. 4, the curvature of the tread surface is shown in an enlarged manner as compared with an actual one in order to make the invention easily understood. The tread surface of the land portion is a portion, of the land portion, which contacts with a plane when the normal load is applied to the tire 1 in the normal state and the tire 1 in this state is brought into contact with the plane at a camber angle of 0°. Therefore, the ends of the tread surface of the land portion 4 disposed between the main grooves 3 are identical to the groove edges of the main grooves 3.

Each of a difference in depth between the crown main groove 7 and the first shoulder main groove 5 and a difference in depth between the crown main groove 7 and the second shoulder main groove 6 is preferably 0.2 to 0.6 mm and more preferably 0.3 to 0.5 mm. Thus, the contact pressure onto the tread portion 2 can be more uniformly distributed.

According to the invention, in each of the first middle land portion 11 and the second middle land portion 12, a maximum projection t1 of the tread surface from an imaginary straight line 15 that connects between both ends, in the tire axial direction, of the tread surface is 0.10 to 0.25 mm. Thus, contact pressure is likely to uniformly act on the tread surface of the middle land portion, so that uneven wear at ends of the tread surface of the middle land portion is further reduced.

The maximum projection t1 is less than each of the difference in the depth between the crown main groove 7 and the first shoulder main groove 5 and the difference in the depth between the crown main groove 7 and the second shoulder main groove 6. Thus, the contact pressure at a portion, of each tread surface, having the greatest projection can be inhibited from becoming excessively high and wear resistance can be further improved.

From the same viewpoint, for example, a curvature radius R1 of each of the tread surface 11s of the first middle land portion 11 and the tread surface 12s of the second middle land portion 12 is preferably 450 to 900 mm and more preferably 550 to 750 mm.

The main grooves 3 each include a groove wall surface 3a that extends inward from the groove edge in the tire radial direction, and a groove bottom surface 3b that is continuous with the groove wall surface 3a. In each of the first shoulder main groove 5, the second shoulder main groove 6, and the crown main groove 7, for example, the groove wall surface 3a and the groove bottom surface 3b are preferably connected by a curved surface having a curvature radius R2. For example, the curvature radius R2 is preferably 1.5 to 4.5 mm and more preferably 2.5 to 3.0 mm. The main grooves 3 having such a structure allow a groove volume to be assured while maintaining stiffness, in the tire axial direction, of the land portion 4, thereby allowing well-balanced improvement of wet performance and steering stability.

The curvature radius R2 is at least greater than the maximum projection t1 of the tread surface. Furthermore, in the present embodiment, the curvature radius R2 is preferably greater than each of the difference in the depth between the crown main groove 7 and the first shoulder main groove 5 and the difference in the depth between the crown main groove 7 and the second shoulder main groove 6. Thus, the stiffness, in the tire axial direction, of the land portion 4 can be sufficiently maintained and excellent steering stability can be exhibited.

From the same viewpoint, in each of the first shoulder main groove 5, the second shoulder main groove 6, and the crown main groove 7, the groove wall surface 3a is preferably tilted, relative to the line that is normal to the tread and passes through the groove edge, at an angle θ1 of 18 to 22°.

As shown in FIG. 3, each of the first middle land portion 11 and the second middle land portion 12 preferably has a plurality of sipe pairs 20. Each sipe pair 20 includes two semi-open sipes 21 that extend from the main grooves 3 on both sides, respectively, and are disconnected in the land portion 4. In the description herein, the "sipe" represents a cut portion having a width of less than 1.5 mm. The width of the sipe is more preferably 0.5 to 1.0 mm.

In the present embodiment, each semi-open sipe 21 of the sipe pair 20 is disposed so as not to overlap the maximum projection portion, of the tread surface of the middle land portion, which most greatly projects (corresponding to the center position, in the tire axial direction, of the tread surface in the present embodiment). The sipe pair 20 having such a structure serves to further improve wear resistance.

In a more preferable mode, the first middle land portion 11 of the present embodiment has overlapping sipes 23 that overlap the maximum projection portion and terminate in the land portion. The second middle land portion 12 of the present embodiment has transverse sipes 24 that extend fully across the land portion. By the sipes being thus arranged, stiffness of the first middle land portion 11 is relatively improved while wet performance is improved, so that steering stability can be also improved.

Although the tire according to one embodiment of the present invention has been described above in detail, the present invention is not limited to the above-described specific embodiment, and various modifications can be devised to implement the present invention within the scope defined by the appended claims.

[Examples] A sample of a tire having a size of 205/5 5R16 and a basic pattern shown in FIG. 1 was produced. As comparative example, a sample of a tire having a profile in which a difference in depth between a crown main groove and each shoulder main groove was 0, and tread surfaces of a first middle land portion and a second middle land portion extended linearly on the meridian cross-section was produced. The pattern of the tread portion of the tire of comparative example was substantially the same as that shown in FIG. 1 except for the above-described matters. Wear resistance, steering stability, and wet performance were tested for each test tire. Specifications common to the test tires and a test method were as follows.
Rim on which the tire was mounted: 16×6.5J
Tire internal pressure: 200 kPa for front wheel, 200 kPa for rear wheel
Test vehicle: front-wheel-drive vehicle having engine displacement of 1600 cc
Positions at which tires were mounted: all wheels

### <Wear resistance>

A wear energy measuring device was used to measure wear energy of each of the first middle land portion and the second middle land portion. The results are indicated as indexes with the wear energy of comparative example being 100. The less the value of the index is, the less the wear energy is and the more excellent wear resistance is.

### <Steering stability>

A driver made sensory evaluation for steering stability when the driver drove the test vehicle on a dry road surface. The results are indicated as scores with the score of comparative example being 100. The greater the value of the score is, the more excellent steering stability is.

### <Wet performance>

A driver made sensory evaluation for running performance when the driver drove the test vehicle on a wet road surface. The results are indicated as scores with the score of comparative example being 100. The greater the value of the score is, the more excellent wet performance is.

The test results are indicated in Table 1.

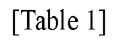

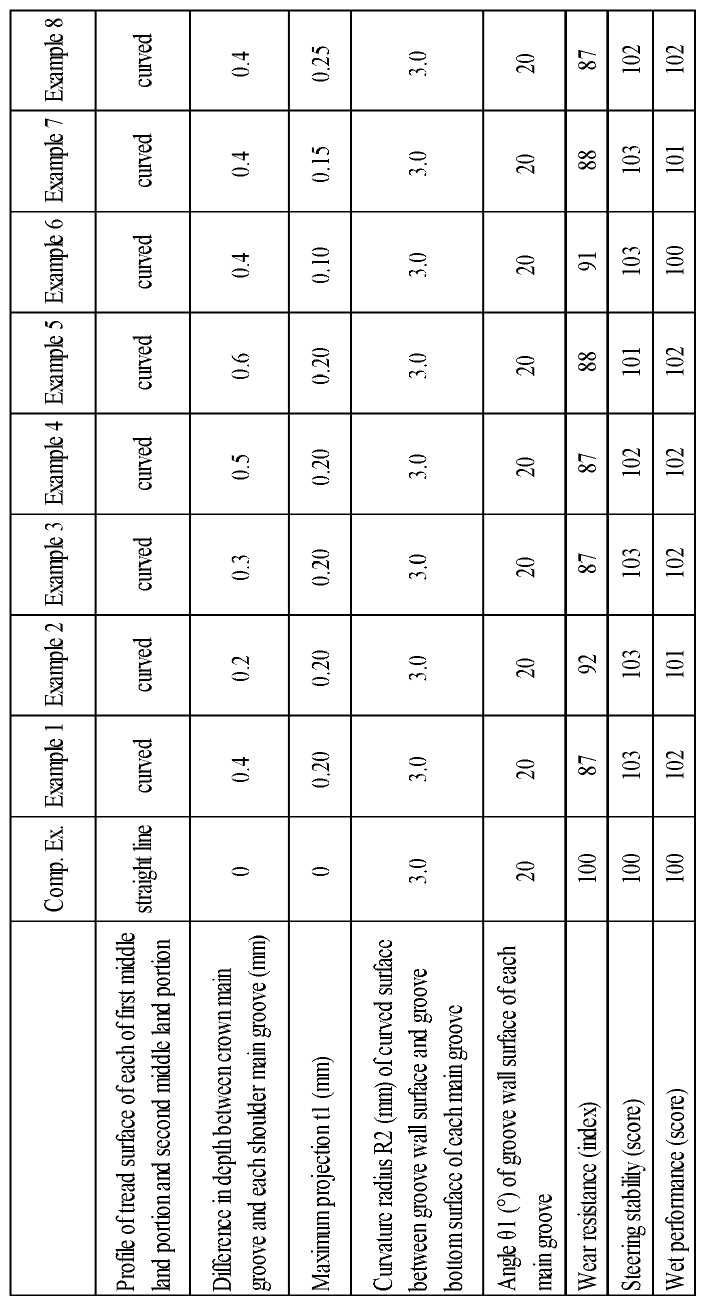

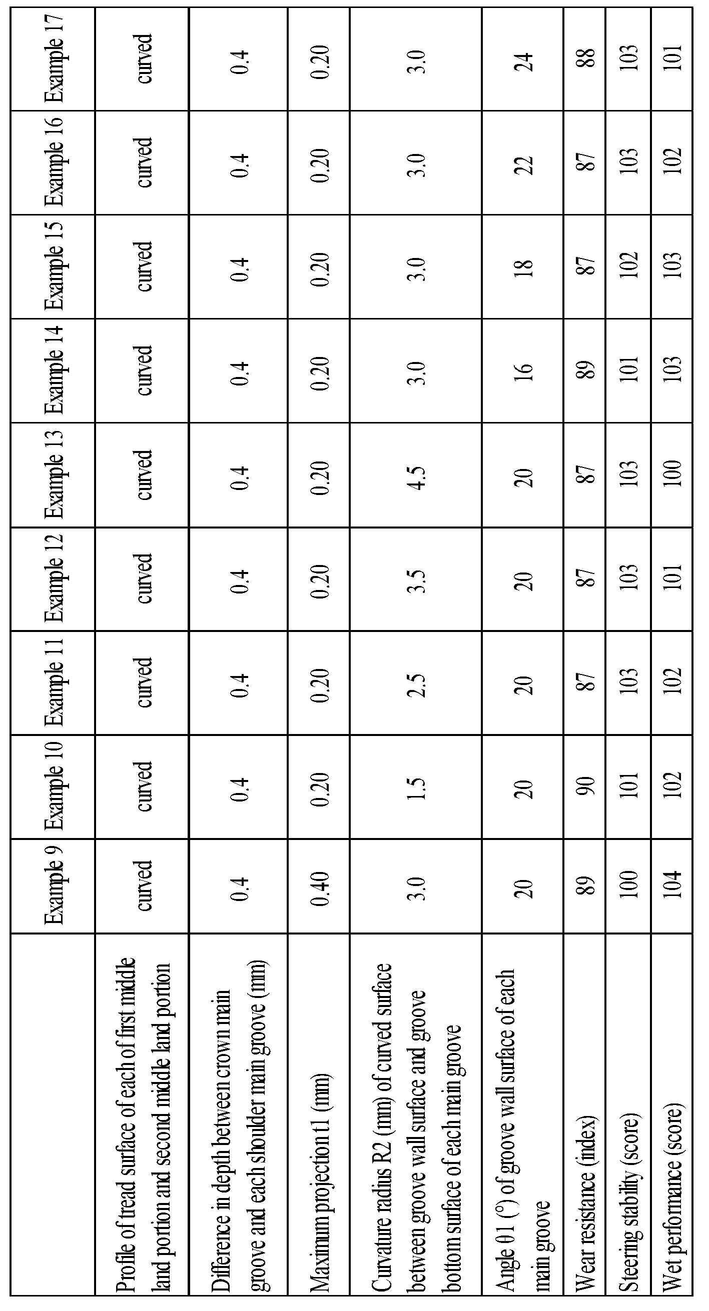

According to the test results, it is confirmed that the tires of examples had excellent wear resistance. Furthermore, it is also confirmed that the tires of examples allowed steering stability and wet performance to be maintained.

## Claims

1. A tire (1) comprising
a tread portion (2), wherein
the tread portion (2) includes a plurality of main grooves (3) that extend continuously in a tire circumferential direction between a first tread end (Te1) and a second tread end (Te2), and a plurality of land portions (4) that are defined by the main grooves (3),
the main grooves (3) include a first shoulder main groove (5) disposed between the first tread end (Te1) and a tire equator (C), a second shoulder main groove (6) disposed between the second tread end (Te2) and the tire equator (C), and one or two crown main grooves (7) disposed between the first shoulder main groove (5) and the second shoulder main groove (6),
the land portions (4) include a first middle land portion (11) defined between the first shoulder main groove (5) and the crown main groove (7) and a second middle land portion (12) defined between the second shoulder main groove (6) and the crown main groove (7), and
on a meridian cross-section that includes a tire rotation axis in a normal state in which the tire (1) is mounted on a normal rim at a normal internal pressure and no load is applied to the tire (1),
a depth (d2) of the crown main groove (7) is greater than each of a depth (d3) of the first shoulder main groove (5) and a depth (d4) of the second shoulder main groove (6), and
a tread surface (11s) of the first middle land portion (11) and a tread surface (12s) of the second middle land portion (12) each have a profile that is curved so as to project outward in a tire radial direction from an imaginary straight line that connects between both ends, in the tire axial direction, of the respective tread surface (11s, 12s),
**characterized in that**
in each of the first middle land portion (11) and the second middle land portion (12),
a maximum projection of the tread surface (11s, 12s) from an imaginary straight line that connects between both ends, in a tire axial direction, of the tread surface (11s, 12s) is 0.10 to 0.25 mm, and
the maximum projection is less than each of the difference in depth between the crown main groove (7) and the first shoulder main groove (5) and the difference in depth between the crown main groove (7) and the second shoulder main groove (6).

2. The tire (1) according to claim 1, wherein a difference in depth between the crown main groove (7) and the first shoulder main groove (5) and a difference in depth between the crown main groove (7) and the second shoulder main groove (6) are each 0.3 to 0.5 mm.

3. The tire (1) according to claim 1 or 2, wherein
each main groove (3) has a groove wall surface (3a) that extends inward from a groove edge in the tire radial direction, and a groove bottom surface (3b) that is continuous with the groove wall surface (3a), and
in each of the first shoulder main groove (5), the second shoulder main groove (6), and the crown main groove (7), the groove wall surface (3a) and the groove bottom surface (3b) are connected by a curved surface having a curvature radius of 2.5 to 3.0 mm.

4. The tire (1) according to any one of claims 1 to 3, wherein
each main groove (3) has the groove wall surface (3a) that extends inward from the groove edge in the tire radial direction, and
in each of the first shoulder main groove (5), the second shoulder main groove (6), and the crown main groove (7), the groove wall surface (3a) is tilted, relative to a line that is normal to a tread and passes through the groove edge, at an angle θ1) of 18 to 22°.

## Patentansprüche

1. Reifen (1), umfassend
einen Laufflächenabschnitt (2), wobei
der Laufflächenabschnitt (2) eine Vielzahl von Hauptrillen (3), die sich kontinuierlich in einer Reifenumfangsrichtung zwischen einem ersten Laufflächenende (Te1) und einem zweiten Laufflächenende (Te2) erstrecken, und eine Vielzahl von Landabschnitten (4), die durch die Hauptrillen (3) definiert sind, aufweist,
die Hauptrillen (3) eine erste Schulterhauptrille (5), die zwischen dem ersten Laufflächenende (Te1) und einem Reifenäquator (C) angeordnet ist, eine zweite Schulterhauptrille (6), die zwischen dem zweiten Laufflächenende (Te2) und dem Reifenäquator (C) angeordnet ist, und eine oder zwei Kronenhauptrillen (7) umfassen, die zwischen der ersten Schulterhauptrille (5) und der zweiten Schulterhauptrille (6) angeordnet sind,
die Landabschnitte (4) einen ersten mittleren Landabschnitt (11) umfassen, der zwischen der ersten Schulterhauptrille (5) und der Kronenhauptrille (7) definiert ist, und einen zweiten mittleren Landabschnitt (12), der zwischen der zweiten Schulterhauptrille (6) und der Kronenhauptrille (7) definiert ist, und
auf einem Meridianquerschnitt, der eine Reifendrehachse einschließt, in einem normalen Zustand, in dem der Reifen (1) auf eine normale Felge mit einem normalen Innendruck aufgezogen und keine Last auf den Reifen (1) aufgebracht ist,
eine Tiefe (d2) der Kronenhauptrille (7) größer ist als jeweils eine Tiefe (d3) der ersten Schulterhauptrille (5) bzw. eine Tiefe (d4) der zweiten Schulterhauptrille (6), und
eine Laufflächenoberfläche (11s) des ersten mittleren Landabschnitts (11) und eine Laufflächenoberfläche (12s) des zweiten mittleren Landabschnitts (12) jeweils ein Profil aufweisen, das so gekrümmt ist, dass es in einer radialen Richtung des Reifens von der jeweiligen Laufflächenoberfläche (11s, 12s) von einer imaginären geraden Linie, die eine Verbindung zwischen beiden Enden in der axialen Richtung des Reifens herstellt, nach außen vorsteht,
**dadurch gekennzeichnet, dass**
in einem jeden von dem ersten mittleren Landabschnitt (11) und dem zweiten mittleren Landabschnitt (12),
ein maximaler Vorstand der Laufflächenoberfläche (11s, 12s) von einer imaginären geraden Linie, die eine Verbindung zwischen den beiden Enden der Laufflächenoberfläche (11s, 12s) in einer axialen Richtung des Reifens herstellt, 0,10 bis 0,25 mm beträgt, und
der maximale Vorstand kleiner ist als eine jede von der Tiefendifferenz zwischen der Kronenhauptrille (7) und der ersten Schulterhauptrille (5) und der Tiefendifferenz zwischen der Kronenhauptrille (7) und der zweiten Schulterhauptrille (6).

2. Reifen (1) nach Anspruch 1, wobei eine Tiefendifferenz zwischen der Kronenhauptrille (7) und der ersten Schulterhauptrille (5) und eine Tiefendifferenz zwischen der Kronenhauptrille (7) und der zweiten Schulterhauptrille (6) jeweils 0,3 bis 0,5 mm betragen.

3. Reifen (1) nach Anspruch 1 oder 2, wobei
jede Hauptrille (3) eine Rillenwandfläche (3a), die sich von einer Rillenkante in der radialen Richtung des Reifens nach innen erstreckt, und eine Rillengrundfläche (3b) aufweist, die sich von der Rillenwandfläche (3a) fortsetzt, und
in einer jeden von der ersten Schulterhauptrille (5), der zweiten Schulterhauptrille (6) und der Kronenhauptrille (7) die Rillenwandfläche (3a) und die Rillengrundfläche (3b) durch eine gekrümmte Fläche mit einem Krümmungsradius von 2,5 bis 3,0 mm verbunden sind.

4. Reifen (1) nach einem der Ansprüche 1 bis 3, wobei
die Rillenwandfläche (3a) jeder Hauptrille (3) sich von der Rillenkante in der radialen Richtung des Reifens nach innen erstreckt, und
in einer jeden von der ersten Schulterhauptrille (5), der zweiten Schulterhauptrille (6) und der Kronenhauptrille (7) die Rillenwandfläche (3a) relativ zu einer Linie, die normal zu einer Lauffläche ist und durch die Rillenkante verläuft, in einem Winkel θ1) von 18 bis 22° geneigt ist.

## Revendications

1. Pneumatique (1) comprenant :
une portion formant bande de roulement (2), dans lequel la portion formant bande de roulement (2) inclut une pluralité de rainures principales (3) qui s'étendent en continu dans une direction circonférentielle du pneumatique entre une première extrémité de bande de roulement (Te1) et une seconde extrémité de bande de roulement (Te2), et une pluralité de portions en relief (4) qui sont définies par les rainures principales (3),
les rainures principales (3) incluent une première rainure principale d'épaulement (5) disposée entre la première extrémité de bande de roulement (Te1) et un équateur de pneumatique (C), une seconde rainure principale d'épaulement (6) disposée entre la seconde extrémité de bande de roulement (Te2) et l'équateur de pneumatique (C), et une ou deux rainures principales de couronne (7) disposée(s) entre la première rainure principale d'épaulement (5) et la seconde rainure principale d'épaulement (6),
les portions en relief (4) incluent une première portion en relief médiane (11) définie entre la première rainure principale d'épaulement (5) et la rainure principale de couronne (7) et une seconde rainure en relief médiane (12) définie entre la seconde rainure principale d'épaulement (6) et la rainure principale de couronne (7), et
sur une section transversale méridienne qui inclut un axe de rotation du pneumatique dans un état normal dans lequel le pneumatique (1) est monté sur une jante normale à une pression interne normale et aucune charge n'est appliquée sur le pneumatique (1),
une profondeur (d2) de la rainure principale de couronne (7) est supérieure à chaque profondeur parmi une profondeur (d3) de la première rainure principale d'épaulement (5) et une profondeur (d4) de la seconde rainure principale d'épaulement (6) et
une surface de bande de roulement (11s) de la première portion en relief médiane (11) et une surface de bande de roulement (12s) de la seconde portion en relief médiane (12) ont chacune un profil qui est incurvé de manière à se projeter vers l'extérieur dans une direction radiale du pneumatique depuis une ligne droite imaginaire qui assure une connexion entre les deux extrémités, dans la direction axiale du pneumatique, de la surface de bande de roulement respectives (11s, 12s),
**caractérisé en ce que**
dans chaque portion parmi la première portion en relief médiane (11) et la seconde portion en relief médiane (12),
une projection maximum de la surface de bande de roulement (11s, 12s) depuis une ligne droite imaginaire qui assure une connexion entre les deux extrémités, dans une direction axiale du pneumatique, de la surface de bande de roulement (11s, 12s) est de 0,10 à 0,25 mm, et
la projection maximum est inférieure à chaque différence parmi la différence en profondeur entre la rainure principale de couronne (7) et la première rainure principale d'épaulement (5) et la différence en profondeur entre la rainure principale de couronne (7) et la seconde rainure principale d'épaulement (6).

2. Pneumatique (1) selon la revendication 1, dans laquelle une différence en profondeur entre la rainure principale de couronne (7) et la première rainure principale d'épaulement (5) et une différence en profondeur entre la rainure principale de couronne (7) et la seconde rainure principale d'épaulement (6) sont chacune de 0,3 à 0,5 mm.

3. Pneumatique (1) selon la revendication 1 ou 2, dans lequel chaque rainure principale (3) a une surface de paroi de rainure (3a) qui s'étend vers l'intérieur depuis un bord de rainure dans la direction radiale du pneumatique, et une surface de fond de rainure (3b) qui est continue avec la surface de paroi de rainure (3a), et
dans chaque rainure parmi la première rainure principale d'épaulement (5), la seconde rainure principale d'épaulement (6) et la rainure principale de couronne (7), la surface de paroi de rainure (3a) et la surface de fond de rainure (3b) sont connectées par une surface incurvée ayant un rayon de courbure de 2,5 à 3,0 mm.

4. Pneumatique (1) selon l'une quelconque des revendications 1 à 3, dans lequel
chaque rainure principale (3) a la surface de paroi de rainure (3a) qui s'étend vers l'intérieur depuis le bord de rainure dans la direction radiale du pneumatique, et
dans chaque rainure parmi la première rainure principale d'épaulement (5), la seconde rainure principale d'épaulement (6) et la rainure principale de couronne (7), la surface de paroi de rainure (3a) est inclinée, relativement à une ligne qui est perpendiculaire à une bande de roulement et qui passe à travers le bord de rainure, sous un angle θ1) de 18 à 22°.
